# EUROPÄISCHE PATENTSCHRIFT

(11) **EP 2 208 402 B1**
(45) Veröffentlichungstag und Bekanntmachung des Hinweises auf die Patenterteilung: **26.06.2013**
(21) Anmeldenummer: 08847779.9
(22) Anmeldetag: 04.11.2008
(51) Int. Cl.: H05B 41/288

(54) **VORSCHALTGERÄT FÜR EINE GASENTLADUNGSLAMPE, BSPW. EINE HID-LAMPE**
BALLAST FOR A GAS DISCHARGE LAMP, FOR EXAMPLE AN HID LAMP
BALLAST POUR LAMPE À DÉCHARGE, PAR EXEMPLE POUR UNE LAMPE DHI

(30) Priorität: 05.11.2007 DE 102007052669; 23.06.2008 DE 102008029587
(43) Veröffentlichungstag der Anmeldung: 21.07.2010
(73) Patentinhaber: Tridonic GmbH & Co KG, 6851 Dornbirn (AT)
(72) Erfinder: PEREIRA, Eduardo, CH-8854 Siebnen (CH); BRAUN, Markus, CH-8633 Wolfhausen (CH); FINK, Jürgen, A-6911 Lochau (AT); KNOEDGEN, Horst, 80997 München (DE); KOLAR, Johann, W., CH-8044 Zürich (CH); BIELA, Jürgen, CH-8004 Zürich (CH); GIEZENDANNER, Florian, CH-8050 Zürich (CH)
(74) Vertreter: Rupp, Christian
(86) Internationale Anmeldenummer: PCT/EP2008/009294
(87) Internationale Veröffentlichungsnummer: WO 2009/059744

(56) Entgegenhaltungen:
- DE-A1- 4 009 267
- DE-A1- 4 425 679
- DE-T2- 69 634 892
- US-A- 4 904 905
- US-A- 5 798 619

## Beschreibung

Die Erfindung betrifft die Ansteuerung eines Hochpotential ("Highside")-Transistors, die bspw. Anwendung finden kann in einem Betriebsgerät für Leuchtmittel, beispielsweise einem Vorschaltgerät für eine Gasentladungslampe oder eine LED, und genauer gesagt bspw. in einem Schaltregler wie bspw. einem Wechselrichter.

Ein Vorschaltgerät mit einer Halbbrückenschaltung (Inverter) ist bekannt. Insbesondere dann, wenn hohe Leistungen geschaltet werden soll, werden als Schalterelemente des Inverters FETs, MOSFETs oder IGBTs verwendet. Diese Bauelemente zeichnen sich nicht nur dadurch aus, dass sie leistungsarm schalten, sondern auch dadurch, dass sie sehr schnell schalten. Allerdings sind die genannten Bauelemente mit sehr hochohmigen Eingängen (Gates) versehen, die auch eine Treiberschaltung mit einem sehr hochohmigen Ausgang erforderlich machen. Die Treiberschaltung muss sogar gewährleisten, dass zumindest das auf hohem Potential liegende ("high side") Schalterelement galvanisch gegen Masse isoliert ist. Dies ist dadurch möglich, dass eine Treiberschaltung mit Transformator eingesetzt wird, deren Primärwicklung und Sekundärwicklung nur induktiv gekoppelt, galvanisch aber getrennt sind.

Die DE 4425679 A1 betrifft eine Vorrichtung zum Betreiben einer Hochdruck-Gasentladungslampe, in der eine Stromwandlerschaltung mit einer Gleichstromquelle zum Umwandeln des Gleichstromes in einen Wechselstrom verbunden ist, indem zwei Schaltelemente in der Stromwandlerschaltung durchgeschaltet und geöffnet werden. EIN/AUS-Signale, die von einer Steuerschaltung erzeugt werden, werden auf diese Schaltelemente so verteilt, dass diese Elemente abwechselnd durchgeschaltet und geöffnet werden.

Der Erfindung liegt die Aufgabe zugrunde, eine Technik zur Ansteuerung eines Schaltelements vorzuschlagen, die insbesondere für die Verhältnisse in Vorschaltgeräten mit Vollbrücken- oder Halbbrücken-Wechselrichtern oder einem anderem Schaltregler ausgelegt ist.

Diese Aufgabe wird erfindungsgemäss durch die Merkmale der unabhängigen Ansprüche gelöst. Die abhängigen Ansprüche bilden den zentralen Gedanken der Erfindung in besonders vorteilhafter Weise weiter.

Ein erster Aspekt der Erfindung betrifft ein Verfahren zur Ansteuerung des Steuereingangs bspw. eines auf hohem Potential liegenden Schaltelements, insbesondere eines Transistors, wobei der Steuereingang transformatorisch galvanisch entkoppelt ist. Dabei erfolgt das Ein- bzw. Ausschalten des Steuereingangs durch transformatorische Übertragung von Strom- oder Spannungsimpulsen von einer Steuereinheit als Taktsignalquelle.

Das Ein- bzw. Ausschalten erfolgt bspw. durch bipolare Spannungsimpulse. Diese Spannungsimpulse sind Schaltimpulse, mit denen bspw. Strompulse funktional gleichzusetzen sind.

Die Erfindung kann dabei sowohl als Ansteuerung des Steuereingangs eines auf hohem Potential liegenden Schaltelements genutzt werden, bei dem eine galvanische Trennung erforderlich sein kann, als auch zur galvanisch entkoppelten Ansteuerung des Steuereingangs eines Schaltelements, welches nicht auf einem hohen Potential liegt, dessen Ansteuerung aber eine galvanische Trennung erfordert.

Ein Spannungsimpuls erster Polarität lädt bspw. über ein erstes Schaltungsbauteil den Steuereingang auf, diese Ladung verbleibt auch nach dem Spannungsimpuls erster Polarität und somit das Schaltelement eingeschaltet und ein Spannungsimpuls mit umgekehrter Polarität entlädt die Ladung an dem Steuereingang über ein zweites Steuerelement derart, dass das Schaltelement ausgeschaltet wird.

Als erstes Steuerelement kann eine Diode, vorzugsweise eine Zenerdiode verwendet werden.

Als zweites Steuerelement kann eine Diode und/oder ein Transistor verwendet werden.

Die Strom- oder Spannungsimpulse sind vorzugsweise kürzer als die Ein- oder Ausschaltzeit des angesteuerten Schaltelements. Dabei sind auch Folgen von mehreren Impulsen möglich, um das Schaltelement in einem gewünschten Zustand zu halten.

Die Steuereinheit kann als Taktsignalquelle in einem vorbestimmten Takt Spannungsimpulse ausgeben, unabhängig davon, ob der Zustand des Schaltelements geändert werden soll.

Dabei kann die Steuereinheit für den Fall, dass der Zustand des Schaltelements geändert werden soll, auf einen ersten Spannungsimpuls einen zweiten Impuls mit zu dem ersten Spannungsimpuls umgekehrter Polarität aussenden.

Die Steuereinheit kann für den Fall, dass der Zustand des Schaltelements beibehalten werden soll, auf einen Spannungsimpuls erster Polarität erneut einen Spannungsimpuls derselben Polarität senden.

Die Erfindung bezieht sich auch auf eine Steuereinheit, insbesondere eine integrierte Schaltung wie z.B. einem ASIC, die zur Ausführung eines Verfahrens nach einem der vorhergehenden Ansprüche ausgebildet ist.

Die Erfindung bezieht sich weiterhin auf einen Halbbrücken- oder Vollbrücken-Wechselrichter oder anderen Schaltregler mit wenigstens einem Schalter. Dabei wird wenigstens ein Schalter mittels einem oben erläuterten Verfahren nach einem der vorhergehenden Ansprüche angesteuert.

Ein Vorschaltgerät für Gasentladungslampen, insbesondere HID-Lampen, kann einen derartigen Wechselrichter aufweisen.

Ein weiterer Aspekt der Erfindung bezieht sich dabei auf ein Verfahren zur Ansteuerung eines Transistors eines Betriebsgeräts für Leuchtmittel. Dabei
- ist der Steuereingang des Transistors mittels eines Transformators galvanisch entkoppelt ist, wobei der Steuereingang mit der Sekundärseite des Transformators verbunden ist und die Sekundärseite des Transformators eine erste und eine zweite gegensinnig gepolte und in Serie geschaltete Wicklungen aufweist, und
- erfolgt das Ein- bzw. Ausschalten des Steuereingangs durch transformatorische Übertragung von Strom- oder Spannungsimpulsen von einer Steuereinheit als Taktsignalquelle.

Zum Einschalten des Transistors wird primärseitig ein Spannungsimpuls einer ersten Polarität erzeugt, über den der Transistor über die erste sekundärseitige Wicklung eingeschaltet wird und ein Entladetransistor, der im eingeschalteten Zustand den Steuereingang des Transistors entlädt, durch die zweite sekundärseitige Wicklung aktiv ausgeschaltet wird.

Zum Ausschalten des Transistors wird primärseitig ein Spannungsimpuls einer zweite, zu der ersten Polarität invertierten Polarität erzeugt, über den über die zweite sekundärseitige Wicklung ein Entladetransistor eingeschaltet wird, der somit den Steuereingang des Transistors entlädt, so dass dieser ausgeschaltet wird.

Die sekundärseitigen Wicklungen können mit einer Drossel eines Lastkreises integriert sein (also zusammen mit der Drossel des Lastkreises auf einen gemeinsamen Kern gewickelt sein), welcher Lastkreis mit dem Verbindungspunkt zweier in Serie geschalteter Transistoren verbunden ist, dessen potentialhöherer Transistor transformatorisch über Spannungsimpulse angesteuert wird.

Ein Ausführungsbeispiel der Erfindung wird nachfolgend anhand der Zeichnungen beschrieben.
- Fig. 1: zeigt ein Vorschaltgerät zum Betreiben einer Gasentladungslampe,
- Fig. 2: zeigt Signalverläufe in dem Vorschaltgerät,
- Fig. 3 bis 5: zeigen Ausgestaltungen von Transformatoren als Potentialtrennung eines Highside-Transistors,
- Fig. 6 bis 8: zeigen Ausführungsbeispiele von schematischen Schaltungen zur Ansteuerung eines Highside-Transistors,
- Fig. 9: zeigt Signalverläufe in der Schaltung gemäss Fig. 7b,
- Fig. 10: zeigt eine Schaltung zum Ansteuern einer LED,
- Fig. 11: zeigt ein Vorschaltgerät zum Betreiben einer HID-Lampe,
- Fig. 12: zeigt ein weiteres Ausführungsbeispiel einer erfindungsgemässen Ansteuerschaltung für einen Highside-Transistor, und
- Fig. 13: zeigt Signalverläufe in der erfindungsgemässen Schaltung von Figur 12.

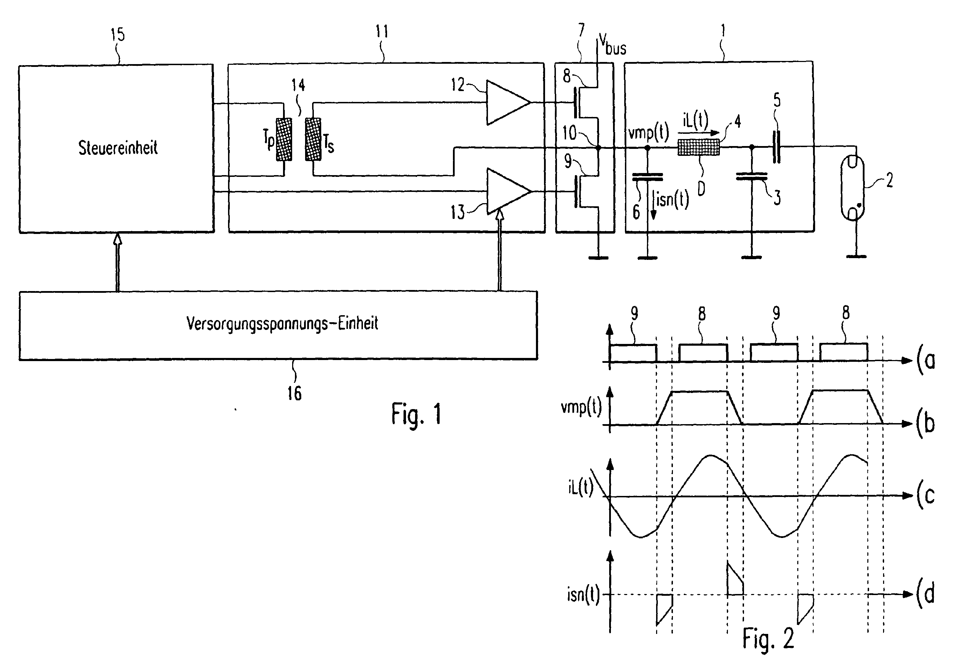

Fig. 1 zeigt ein Vorschaltgerät zum Betreiben einer Gasentladungslampe 2 in schematisierter Form. Das Vorschaltgerät besteht aus einem Lastkreis 1, einem Inverter 7, einer Treiberschaltung 11, einer Steuereinheit 15 und einer Versorgungsspannungseinheit 16. Der Lastkreis 1 enthält wie üblich einen Serienresonanzkreis, bestehend aus einer Drossel 4 und einem Ladekondensator 3. Der Verbindungspunkt zwischen der Drossel 4 und dem Ladekondensator 3 ist über eine Koppelkondensator 5 mit einer Elektrode der Gasentladungslampe 2 verbunden. Die andere Elektrode der Gasentladungslampe 2 liegt an Masse. Die Drossel 4 besteht aus einem nicht gezeigten Kern und einer Drosselwicklung D. Der von dem Ladekondensator 3 abgewandete Anschluss der Drossel 4 ist außerdem mit einem Anschluss eines Dämpfungskondensators (Snubber Cap) verbunden, dessen anderer Anschluss an Masse liegt.

Der Inverter 7 ist eine Halbbrückenschaltung, bestehend aus zwei in Serie geschalteten MOSFETs 8, 9, die als elektronische Schalterelemente arbeiten. Die Serienschaltung aus den beiden MOSFETs 8, 9 liegt einerseits an einem hohen Gleichspannungspotential V_{bus} und andererseits an Masse. Der Verbindungspunkt 10 de Halbbrücke führt zum Lastkreis 1.

(Die Erfindung lässt sich natürlich auch auf Vollbrückenschaltungen anwenden.)

Die Eingänge (Gates) der beiden MOSFETs sind gegenüber Masse sehr hochohmig. Das macht es erforderlich, dass auch die entsprechenden Ausgänge der Treiberschaltung 11 sehr hochohmig sind. Im Falle des oben liegenden MOSFETs 8 besteht sogar die Forderung nach einer vollständigen galvanischen Trennung gegenüber Masse. Die Treiberschaltung 11 enthält dazu einen Transformator 14 mit einem (nicht dargestellten) Kern sowie einer Primärwicklung Tₚ und einer Sekundärwicklung Tₛ. Der eine Anschluss der Sekundärwicklung Tₛ ist mit dem Eingang des oben liegenden Treibers 12 verbunden, dessen Ausgang am Gate des MOSFETs 8 liegt. Der andere Anschluss der Sekundärwicklung Tₛ liegt am Brückenpunkt 10 der den Inverter 7 bildenden Halbbrückenschaltung. Auch das Gate des unten liegenden MOSFETs 9 wird von einem Treiber 13 angesteuert, der direkt zu der Steuereinheit 15 führt. Auch die Primärwicklung Tₚ des Transformators 14 wird von der Steuereinheit 15 versorgt.

Die Steuereinheit 15 liefert Schaltimpulse (ein/aus) an die Treiberschaltung 11. Dabei wird die Resonanz zwischen der Windungskapazität der Primärwicklung sowie ihrer Induktivität ausgenutzt. Wenn der Schaltimpuls "ein" ist, wird die Windungskapazität aufgeladen und der Transformator in einer Richtung magnetisiert. Der oben liegende MOSFET 8 ist dann auf Durchlass geschaltet, während der unten liegende MOSFET 9 gesperrt ist. Wenn dann der Schaltimpuls "aus" folgt, treibt der Transformator den Strom weiter und wird in die andere Richtung ummagnetisiert. Das führt dazu, dass der oben liegende MOSFET 8 gesperrt und der unten liegende MOSFET 9 auf Durchlass geschaltet wird.

Der Dämpfungskondensator 6 im Lastkreis ermöglicht ein Schalten der MOSFETs 8, 9 mit Null-Potential, und er wirkt außerdem als Filter gegen elektromagnetische Störfrequenzen, die eine Folge der Schaltvorgänge sind.

In Figur 2(a) ist erkennbar, wie die beiden MOSFETs 8, 9 wechselweise leitend geschaltet werden.

Figur 2(b) zeigt die Spannung vmp(t) am Brückenpunkt 10 des Inverters 7. Man erkennt, dass trapezförmige Schaltimpulse entstehen.

Figur 2(c) zeigt den Verlauf des Stromes iL(t) durch die Drossel 4. Man erkennt, dass der Strom nahezu sinusförmig ist, was ein Anzeigen dafür ist, dass nahezu keine Oberwellen und damit Störungen erzeugt werden.

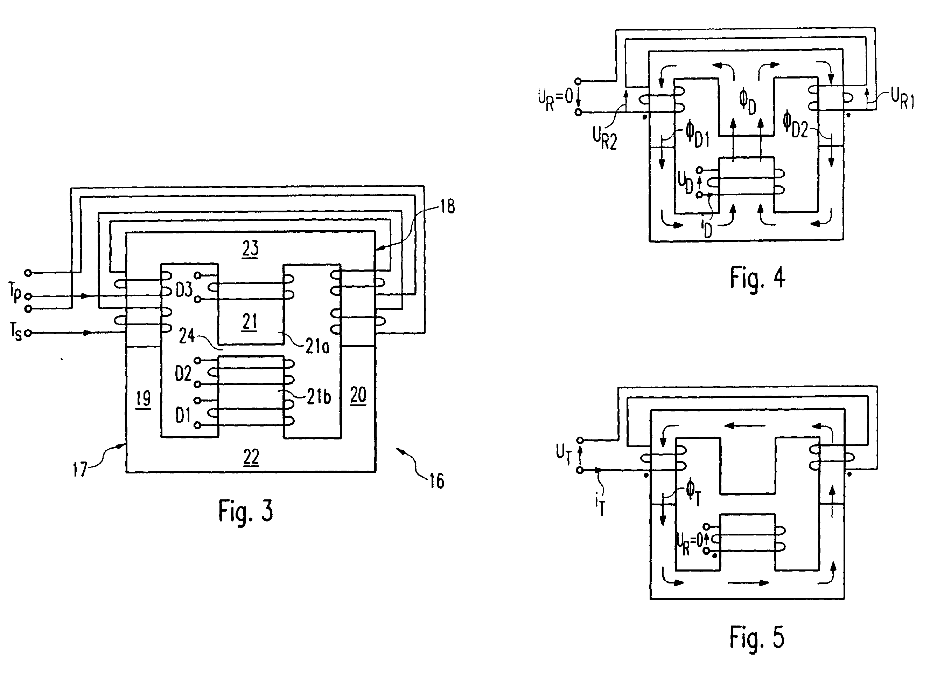

Figur 2(d) zeigt den Verlauf des Stromes durch den Dämpfungskondensator 6. Es handelt sich um kleine Stromimpulse, die mit wechselnder Polarität in den Schaltpausen der MOSFETs 8, 9 auftreten. In diesem Zusammenhang sei darauf hingewiesen, dass die aus Figur 2(a) ersichtlichen Schaltpausen Null-Potential haben. Die eigentliche Erfindung ist in den Figuren 3 bis 5 dargestellt.

Der Transformator 14 und die Drossel 4 haben einen gemeinsamen Kern 16, der aus gegeneinander gesetzten E-Teilkernen 17 und 18 besteht. Der Kern 16 hat zwei Außenschenkel 19 und 20 sowie einen Mittelschenkel 21. Der Mittelschenkel 21 ist von einem Luftspalt 24 unterbrochen und dadurch in zwei Teilschenkel 21a, 21b geteilt. Die drei Schenkel 19, 20, 21 sind an ihren beiden Enden jeweils von einem Querjoch 22, 23 überbrückt.

Die Primärwicklung Tₚ des Transformators 14 ist geteilt, wobei die eine Hälfte auf den Schenkel 19 und die andere Hälfte auf den Schenkel 20 gewickelt ist. Gleichermaßen ist die Sekundärwicklung Tₛ geteilt, wobei die eine Teilwicklung ebenfalls auf den Schenkel 19 und die andere ebenfalls auf den Schenkel 20 des gemeinsamen Kerns 16 gewickelt ist. Der Wicklungssinn wird später erläutert.

Die Drossel 4 besteht aus drei Drosselwicklungen D1, D2 und D3. Diese drei Drosselwicklungen können wahlweise in Serie geschaltet werden, im die Induktivität der Drossel verändern zu können. Auf jeden Fall sind alle drei Drosselwicklungen D1, D2 und D3 auf den Mittelschenkel 21 des gemeinsamen Kernes 16 gewickelt.

Nunmehr soll anhand der Figuren 4 und 5 erläutert werden, wie der Wicklungssinn der Primärwicklungen des Transformators 14 gewählt werden muss, damit der gewünschte Effekt erreicht wird. In Figur 4 sind nur zwei Wicklungen gezeigt, von denen die obere einer der beiden Transformatorwicklungen in Figur 3 entspricht, und von denen die untere einer der Drosselwicklungen in Figur 3 entspricht.

Unter Bezugnahme auf Figur 4 soll zunächst die auf dem Mittelschenkel unten sitzende Wicklung mit einer Spannung U_{D} beaufschlagt werden, die in der Wicklung einen Strom i_{D} erzeugt. Durch den Strom i_{D} wird im Mittelschenkel ein magnetischer Fluss φ_{D} erzeugt, der sich in zwei Teilflüsse φ_{D1} und φ_{D2} aufteilt, die durch die Außenschenkel zurückfließen. Der Wicklungssinn der beiden Teilwicklungen der oberen Wicklung ist nun so gewählt, dass der in den beiden Teilwicklungen durch die beiden Teilflüsse φ_{D1} und φ_{D2} induzierte Strom zu Spannungen U_{R1} und U_{R2} führt, die sich gegenseitig aufheben, so dass am Eingang der oberen Wicklung U_{R} = 0 entsteht. Das Ergebnis ist also: Die obere Wicklung ist von der unteren entkoppelt. Entscheidend ist, dass die Teilwicklungen so angebracht sind, dass sich die aufgrund der darin induzierten Ströme ergebenden Teilspannungen aufheben.

In Figur 5 wird an die obere Wicklung eine Spannung U_{T} angelegt, die einen Strom I_{T} zur Folge hat. Aufgrund des Stromes wird in dem Kern ein Fluss φ_{T} erzeugt, der nur durch die beiden äußeren Schenkel des Kernes sowie die beiden Querjoche läuft, nicht aber durch den Mittelschenkel. Der Grund ist, dass der Mittelschenkel wegen seines Luftspaltes einen wesentlich höheren magnetischen Widerstand als die beiden Außenschenkel hat. Dadurch, dass der Mittelschenkel nicht durchflossen wird, wird in der auf diesen Mittelschenkel sitzenden unteren Wicklung kein Strom induziert. Damit ist auch die untere Wicklung von der oberen Wicklung entkoppelt.

Das für die beiden Figuren 4 und 5 dargelegte Prinzip ist in Figur 3 mit zwei Transformatorwicklungen und drei Drosselwicklungen realisiert. Der Wicklungssinn ist jeweils der gleiche wie in den Figuren 4 und 5. Auch hier ist eine vollständige Entkopplung zwischen den Transformatorwicklungen einerseits und den Drosselwicklungen andererseits gewährleistet. Nicht entkoppelt sind jedoch - was auch nicht sein darf - die Primärwicklung Tₚ und die Sekundärwicklung Tₛ des Transformators 14. Dadurch, dass die Transformatorwicklungen Tₚ und Tₛ sowie die Drosselwicklungen D1, D2 und D3 alle auf dem gleichen Kern 16 sitzen, ist der Schaltungsaufwand um den normalerweise vorhandenen zweiten Kern in beachtlichem Maße reduziert worden.

Das vorstehend beschriebene Prinzip kann auch - unter Bezugnahme auf Figur 3 - wie folgt abgewandelt werden: D₁ und D₂ können Transformatorwicklungen sein. Tₚ kann eine Drosselwicklung sein. D₃ und Tₛ denkt man sich weg. Auch bei einer solchen abgewandelten Version sind die Transformatorwicklungen einerseits und die Drosselwicklung andererseits gegeneinander entkoppelt, während die beiden Transformatorwicklungen miteinander gekoppelt sind.

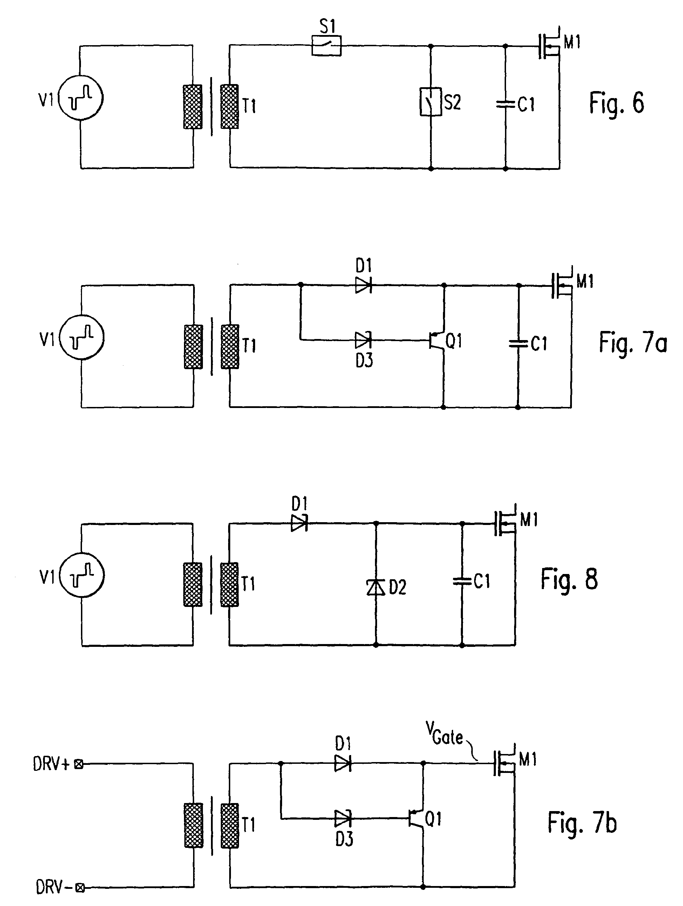

In Figur 6 ist eine erfindungsgemäße Schaltung zur Ansteuerung eines Transistors M1, insbesondere eines MOSFETs gezeigt. Vorzugsweise ist der Transistor M1 ein Transistor, der auf hohem Potential liegt (High Side) und beispielsweise mit einer DC-Busspannung eines Vorschaltgeräts der oben erläuterten Art versorgt ist. Daher soll das Gate des Transistors M1 in potentialgetrennter Weise angesteuert werden. Gemäß der in Figur 6 gezeigten Ausgestaltung ist dazu eine Steuereinheit als Taktsignalquelle V1 vorgesehen, die die primärseitige Wicklung des Transformators T1 versorgt.

Dabei ist die Steuereinheit V1 derart ausgebildet, dass sie vorzugsweise bipolare Impulse von beispielsweise +/-12V ausgeben kann.

Diese bipolaren Impulse werden über den Transformator T1 übertragen. Sekundärseitig ist ein erstes Schaltelement S1 vorgesehen, über das selektiv bei einem ersten Impuls der Steuereinheit V1 das Steuerelement (Transistor) M1 eingeschaltet werden kann. Dazu kann beispielsweise bei einem ersten Impuls über das Schaltungselement S1 der Steuereingang (Gate) des Transistors M1 aufgeladen werden. Erfindungsgemäß verbleibt dann der Schalter in diesem Zustand (beispielsweise eingeschaltet), auch wenn der Impuls wieder abgeklungen ist und somit an der Primärseite des Transistors T1 das Signal 0V anliegt.

Zum Ausschalten des Schaltelements (Transistors) M1 wird ein weiterer Impuls von der Steuereinheit V1 verwendet.

Dies kann vorzugsweise ein Impuls umgekehrter Polarität (beispielsweise -12V) sein. Insbesondere kann ein weiteres Schaltungselement S2 derart an der Sekundärseite des Transformators T1 vorgesehen sein, dass der zweite Impuls eine Entladung des Steuereingangs (Gates) des Transistors M1 durch das zweite Steuerelement S2 auf Masse verursacht.

Dem Schaltelement M1 (Transistor) kann optional ein Ladungs- oder Energiespeicher C1 (zum Beispiel ein Kondensator) parallel geschaltet sein.

Figur 7a zeigt eine erste schaltungstechnische Ausgestaltung des allgemeinen Schemas der Schaltung von Figur 6. Dabei ist das erste Schaltungselement, das also zum Einschalten des Transistors durch Aufladen des Steuereingangs (Gates) dient, eine Diode D1.

Zum Entladen und somit zum Ausschalten des Transistors M1 ist eine Schaltung vorgesehen, die eine Zenerdiode D3 sowie einen Transistor Q1 aufweist.

In Figur 8 ist eine Schaltung dargestellt, bei der das Entladen des Steuereingangs des Transistors M1 nicht durch ein aktives Element (wie der Transistor Q1 gemäß Ausführungsbeispiel von Figur 7a) erfolgt, sondern durch ein weiteres passives Bauelement, nämlich eine Zenerdiode D2.

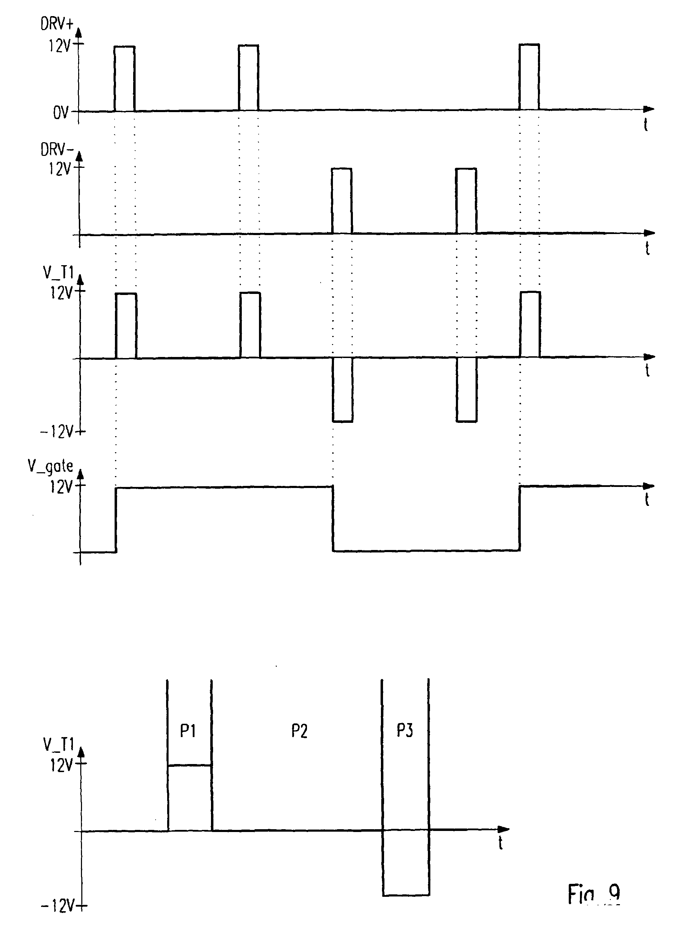

In der Figur 7b, die im Wesentlichen der Figur 7a entspricht, sind verschiedene Spannungen bezeichnet, die in dem Signalverlaufsdiagramm von Figur 9 dargestellt sind.

Dort ist ersichtlich, dass durch einen ersten Impuls DRV+, der als Spannung V_{T1} auch die Sekundärwicklung des Transformators T1 transformiert wird, das Gate des Transistors M1 auf eine Durchschaltspannung V_{Gate} aufgeladen wird.

Auch bei einem zweiten positiven Impuls DRV+ bleibt dieser Einschaltzustand des Transistors M1 erhalten.

Ein Ausschalten durch Entladen des Gates erfolgt gemäß diesem Ausführungsbeispiel durch einen Impuls umgekehrter Polarität, nämlich mit einer Spannung DRV-, die als negativer Spannungsimpuls auf die Sekundärseite des Transistors T1 als Spannung V_T1 transformiert wird. Die vordere Flanke dieses Impulses verursacht dann das Entladen des Steuereingangs des Transistors M1 über ein passives oder ein aktives Bauelement.

Erfindungsgemäß können also eingangsseitig drei verschiedene Zustände erzeugt werden, nämlich ein Impuls erster Polarität, ein Impuls mit einer zweiten, dazu inversen Polarität, sowie der Zustand '0V'.

Das erste Schaltungselement S1, das vorzugsweise als Diode D1 (normale Diode oder Zenerdiode) ausgebildet ist, leitet den positiven Impuls, d.h. den Übergang von beispielsweise 0V auf +12V von dem Transformator T1 auf das Gate des Transistors M1.

Bei einem Übergang von 0V auf die negative Polarität (beispielsweise -12V) schaltet die Zenerdiode D3 durch, was wiederum den Transistor Q1 durchschaltet, so dass das Gate des Transistors (beispielsweise Feldeffekttransistors) M1 entladen wird.

Erfindungsgemäß wird also ein getaktetes Signal von einer Quelle V1 bereitgestellt, wobei dieses getaktete Signal dann über den Übertrager T1 auf die Sekundärseite übertragen wird. Dort sind die Schaltungselemente S1 bzw. S2 vorgesehen, durch die wahlweise das Taktsignal auf das Gate des MOSFETs M1 geleitet werden kann, um diesen aufzuladen, bzw. das geladene Gate des MOSFETs M1 wieder entladen werden kann.

Ein besonderer Vorteil ist dabei, dass der dargestellte Betrieb auch mit sehr niedriger Impulsfolgefrequenz von beispielsweise weniger als 1kHz, vorzugsweise weniger als 100Hz oder gar nahezu DC-Betrieb erfolgen kann. Wenn der Schalter M1 Teil einer Vollbrücken- oder Halbbrücken-Wechselrichterschaltung ist, ist dieser Betrieb mit sehr niedriger Frequenz des Wechselrichters beispielsweise besonders vorteilhaft für Vorschaltgeräte für HID-Lampen.

Erfindungsgemäß kann vorgesehen sein, siehe Figur 9, dass nach beispielsweise nach Einschalten des Transistors M1 durch einen Impuls erster Polarität dieser Impuls wiederholt wird, und zwar nach einem definierten zeitlichen Abstand (Taktung der Signalquelle), was ein 'Auffrischen' des Ladungszustands des Gates des Transistors M1 ermöglicht.

Die Steuereinheit als Taktsignalquelle kann also dazu ausgebildet sein, in einem vorbestimmten Takt Impulse auszugeben, unabhängig davon, ob der Zustand des Transistors M1 geändert werden soll. Für den Fall, dass der Zustand geändert werden soll, wird auf einen ersten Impuls ein zweiter Impuls mit umgekehrter Polarität ausgesendet. Für den Fall, dass der Zustand beibehalten werden soll, wird auf einen Impuls erster Polarität erneut ein Impuls derselben Polarität gesendet, was den Schaltungszustand des Transistors M1 bestätigt ('auffrischt').

Die drei verschiedenen Zustände, die eingangsseitig erzeugt werden können, müssen keine fix definierten Spannungspegel haben, sondern können in drei verschiedenen Wertbereichen liegen. So kann ein Impuls erster Polarität im Bereich von 10V bis 15V, ein Impuls mit einer zweiten, dazu inversen Polarität im Bereich von -10V bis -15V, sowie der Zustand '0V' im Bereich von 5V bis -5V. Somit ist kein Taktsignal mit diskreten Werten notwendig, sondern es kann auch ein analoges Taktsignal mit entsprechender Signalform in den drei Spannungsbereichen verwendet werden.

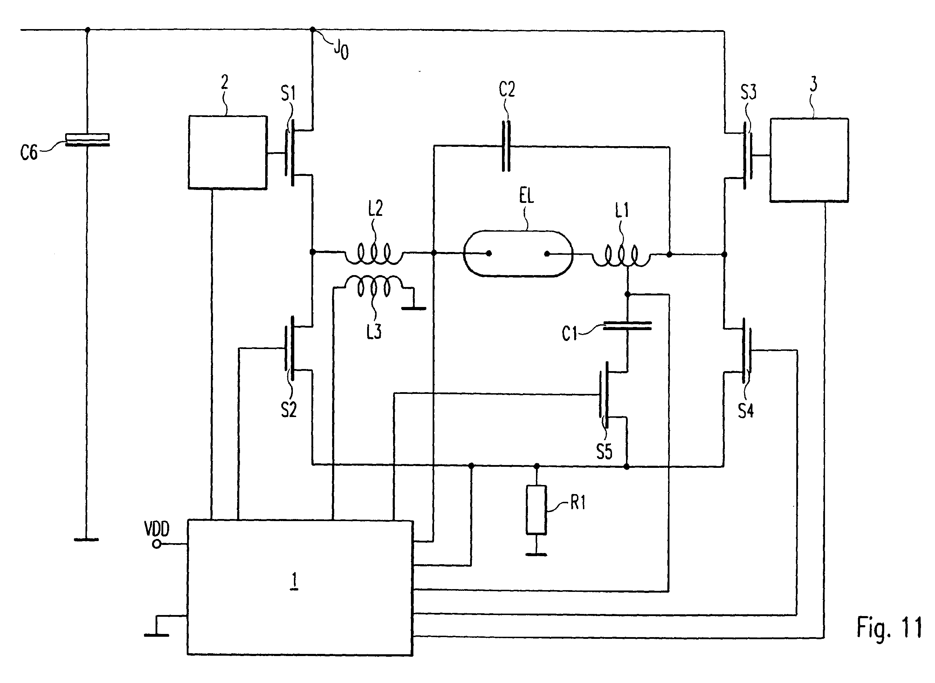

Fig. 11 zeigt eine Betriebsschaltung einer HID Lampe mit einer Vollbrücke, wobei die beiden auf hohem Potential liegenden Schaltelemente S1 und S3 über eine erfindungsgemäße Ansteuerung angesteuert werden. (Die generelle Funktion der Schaltung zum Betrieb von HID Lampen ist in der EP1114571B1 beschrieben.)

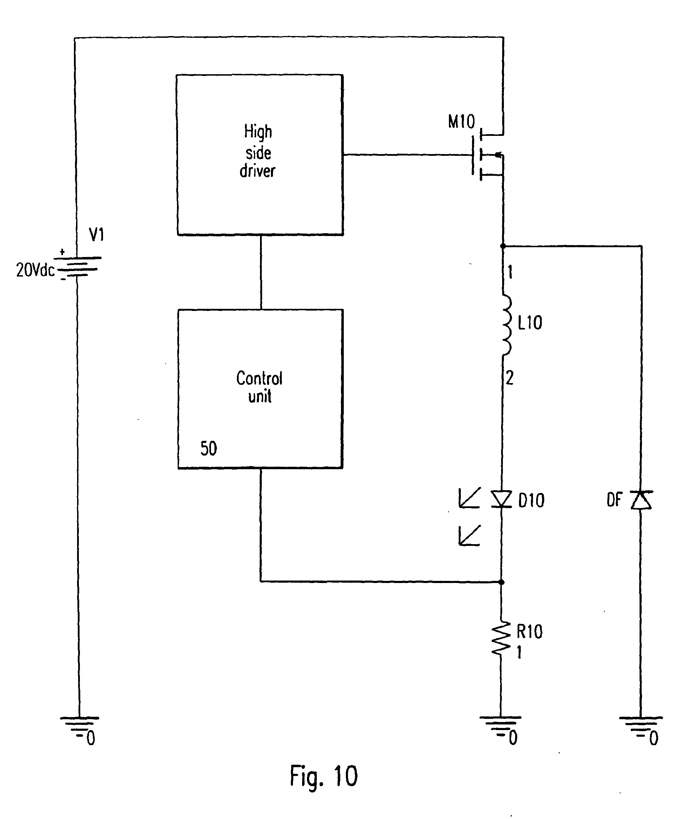

Fig. 10 zeigt einen Schaltregler zum Betrieb einer LED, dies ist eine weitere Anwendungsmöglichkeit der Erfindung. Der Schaltregler ist als sog. Tiefsetzsteller oder auch Buck-Konverter ausgeführt und weist ein erfindungsgemäss angesteuertes Schaltelement auf.

In Bezug auf das Beispiel einer LED-Schaltung wie bei Fig. 10 ist anzumerken, dass die erfindungsgemäße Ansteuerung auch bei anderen Schaltreglertopologien, wie beispielsweise einem Buck-Boost Konverter oder auch einem Inverter angewendet werden kann, vorzugsweise vor allem dann, wenn eine Ansteuerung eines Hochpotential-Transistors gefordert ist.

Durch eine Spannungsversorgung liegt eine geglättete und gleichgerichtete Zwischenkreisspannung V1 an (welche durch eine vorgelagerte Schaltungeinheit bereitgestellt werden kann, die einen Speicherkondensator speist).

Nach dem Anlegen einer geeignet dimensionierten Steuerspannung U_G an das Gate eines beispielsweise als selbstsperrender n-Kanal-MOS-Feldeffekttransistor realisierten ersten Halbleiter-Leistungsschalters M1 wird diese elektronisch steuerbare Schaltstufe elektrisch leitend, so dass ein Drainstrom zu fließen beginnt, der infolge der als Energiespeicher wirkenden Speicherdrossel L10 kontinuierlich ansteigt und als Diodenstrom I_D durch die Lumineszenzdioden D10 (LED) hindurchfließt. Der Anstieg dieses Diodenstroms I_D bei Ladung des Speicherdrossel L10 wird von einem niederohmigen Messwiderstand R10 erfasst, der zugleich im Lastkreis des ersten Leistungsschalters M10 angeordnet und mit dem Masseknoten verbunden ist. Wenn der Diodenstrom I_D einen bestimmten Wert erreicht hat, wird der Leistungsschalter M10 geöffnet.

Dies hat zur Folge, dass der über die Speicherdrossel L10 aufgebaute Diodenstrom I_D durch eine Freilaufdiode DF im Parallelzweig zur Serienschaltung der Lumineszenzdioden D10 dem durch die Speicherdrossel L10 gebildeten induktiven Blindwiderstand XL10 und den niederohmigen Messwiderstand R10 abgeleitet wird. Mit Hilfe dieser verhältnismäßig einfachen schaltungstechnischen Maßnahme wird eine Gefährdung des ersten Halbleiter-Leistungstransistors M1 durch die beim Abschalten des Drainstroms I_D (beim Sperren von M10) am induktiven Blindwiderstand XL10 abfallende Induktionsspannung U_L10 vermieden, die ein Vielfaches der Betriebsspannung betragen kann. Die an dem niederohmigen Messwiderstand R10 abfallende Spannung U_R10 dient dabei zur Erfassung des durch die Lumineszenzdioden D10 fließenden Diodenstroms I_D im freilaufenden Strompfad. Die Schaltstufe M10 bleibt so lange gesperrt, bis der Stromfluss unter eine bestimmte Schwelle abgesunken ist. Nachdem die Schaltstufe M10 wieder zu leiten begonnen hat, wird der oben beschriebene Vorgang in periodisch wiederkehrender Folge fortgesetzt. Bei dem erfindungsgemäßen Verfahren fließt also sowohl der Lade- als auch der Entladestrom I_L10 des induktiven Blindwiderstands XL10 als Diodenstrom I_D durch die Anordnung der seriell geschalteten Lumineszenzdioden D10 des erfindungsgemäßen LED-Beleuchtungsmoduls, so dass sich ein periodisch um einen Mittelwert pendelnder, dreieckförmiger Strom durch die LED ergibt.

Durch die Anordnung des Leistungsschalters M10 vor der Speicherdrossel L10 kann die LED D10 so angeordnet werden, dass sowohl der Lade- als auch der Entladestrom über einen Messwiderstand gegen Masse gemessen werden kann. Somit ist eine einfache Strommessung für beide Ströme möglich. Die Anordnung des Leistungsschalters M10 vor der Speicherdrossel L10 erfordert jedoch eine Ansteuerung auf hohem Potential liegenden Schaltelements. Diese Aufgabe kann durch den Einsatz des erfindungsgemäßen Ansteuerverfahrens gelöst werden.

Die Überwachung des Stromflusses durch den Messwiderstand R10 übernimmt die Steuerschaltung 50, die das Ansteuersignal zum Ein- bzw. Ausschalten des Leistungsschalters M10 an die erfindungsgemäße Ansteuerschaltung für das auf hohem Potential liegende Schaltelement (M10) überträgt.

Es sind auch anwenderspezifische integrierte Schaltungen (engl.: "Application-Specific Integrated Circuits", ASICs) mit einem vergleichsweise geringen Platzbedarf zur Implementierung der Steuereinheit 50 denkbar, deren Messwerterfassungsteil dabei keine hohe Spannungsfestigkeit haben muss.

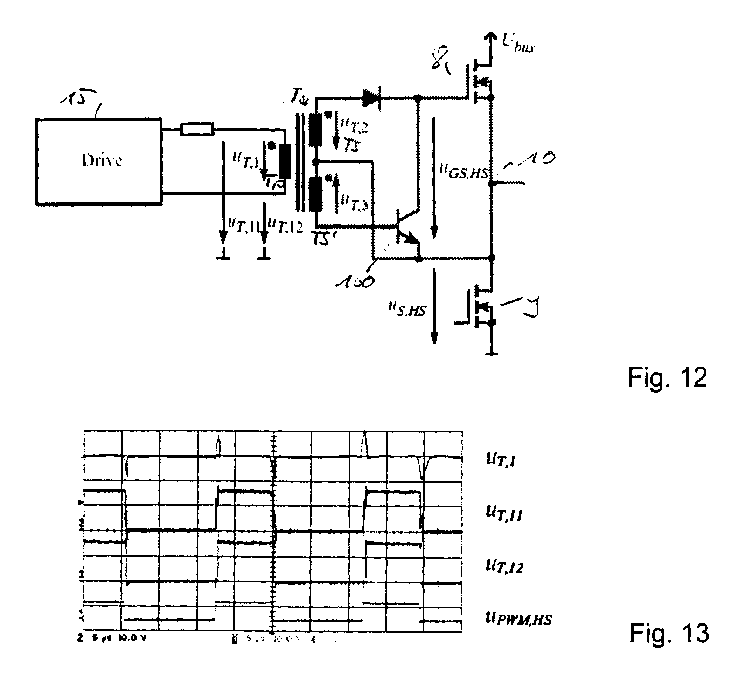

Unter Bezugnahme der Figuren 12 und 13 wird nunmehr eine besonders vorteilhafte Ausgestaltung der erfindungsgemäßen Schaltung erläutert. Wiederum zielt diese Schaltung auf eine Ansteuerung eines Highside-Transistors 8, der in Serie zu einem weiteren Transistor 9 geschaltet sein kann, um somit einen Halbbrücken-Wechselrichter zu bilden, oder zu mindest eine Hälfte eines Vollbrücken-Wechselrichters. Am Mittenpunkt 10 der beiden Transistoren 8, 9 kann wiederum ein Lastkreis vergleichbar zu Figur 1 (dort Block 1) zur Versorgung von Leuchtmitteln vorgesehen sein.

Auch wenn im diesem Ausführungsbeispiel die Ansteuerung eines Highside-Transistors einer Voll- oder Halbbrückenschaltung erläutert werden wird, ist zu verstehen, dass sich diese Ansteuerung auch auf alle zuvor erläuternden Anwendungsszenarien übertragen lässt. Ausgehend von einer Steuereinheit 15 werden bipolare Spannungsimpulse Uₚ₁ auf die primärseitige Wicklung Tₚ eines Transistors eingekoppelt.

Auf der Sekundärseite des Transistors 14 sind indessen nunmehr zwei Wicklungen TS bzw. TS' vorgesehen, die zueinander in Serie geschaltet sind und invertierte Wicklungsrichtungen aufweisen. Dabei weist die erst Wicklung TS den Wicklungssinn der primärseitigen Spule TP auf, während die zweite Wicklung TS' die dazu gegensinnige Wicklungsrichtung aufweist.

Somit stellt sich auf der ersten Wicklung TS eine erste Spannung U_{T,2} und an der zweiten Spule TS' eine dazu vertierte Spannung U_{T,3} ein.

Wie bereits unter Bezugsnahme auf Figuren 1 bis 11 erläutert wird über die erste Wicklung TS der Transistor 8 eingeschaltet (leitend geschaltet).

Gleichzeitig wird aber nunmehr durch die Spannung U_{T,3} an der zweiten Spule TS' der Steuereingang eines Entladetransistors 100 angesteuert, wobei also der Entladetransistor 100 durch die zweite Spule TS' aktiv ausgeschaltet wird, wenn die Spannung der ersten Spule TS den Transistor 8 einschaltet. Somit kann es in verhältnismäßig einfacher Weise sichergestellt werden, dass der Steuereingang (bspw. das Gate im Falle eines MOSFETs) des Transistors 8 nicht unabsichtlich entladen wird, und sich somit der Transistor 8 unabsichtlich ausschaltet.

Wenn nunmehr ausgehend von der Steuereinheit 15 ein im Vergleich zum Einschaltvorgang des Transistors 8 umgekehrter Impuls auf die primärseitige Wicklung Tₚ des Transformators 14 gegeben wird, wird durch die in die zweite Wicklung TS' mit umgekehrtem Wicklungssinn induzierte Spannung U_{T,3} der Entlade-Transistor 100 aktiv eingeschaltet, so dass sich das Gate des Transistors 8 schnell entleert und der Transistor 8 somit schnell aktiv ausgeschaltet werden kann.

In Figur 13 sind die von der Steuereinheit 15 primärseitig erzeugten Spannungsimpulse mit U_{p,1} bezeichnet. Mit der Bezeichnung U_{PWM,HS} ist das Steuersignal am Steuereingang des Highside-Transistors 8 bezeichnet.

Im Vergleich zu den Ausführungsbeispielen von Figur 1 bis Figur 11 hat die Ausführungsform von Figur 12 den Vorteil, dass insbesondere eine Diode mit schneller Ausräumzeit eingespart werden kann.

## Patentansprüche

1. Verfahren zur Ansteuerung des Steuereingangs eines Schaltelements (8, M1), insbesondere eines Transistors,
wobei
- der Steuereingang transformatorisch galvanisch entkoppelt angesteuert wird, und
- das Ein- bzw. Ausschalten des Steuereingangs durch transformatorische Übertragung von Strom- oder Spannungsimpulsen von einer Steuereinheit (15, V1) als Taktsignalquelle erfolgt,
**dadurch gekennzeichnet, dass**
- ein Strom- oder Spannungsimpuls erster Polarität über ein erstes Schaltungsbauteil (S1) den Steuereingang auflädt, diese Ladung auch nach dem Strom- oder Spannungsimpuls erster Polarität verbleibt und somit das Schaltelement (8, M1) eingeschaltet verbleibt und
- ein Strom- oder Spannungsimpuls mit umgekehrter Polarität die Ladung an dem Steuereingang über ein zweites Schaltungsbauteil (S2) entlädt derart, dass das Schaltelement (8, M1) ausgeschaltet wird.

2. Verfahren nach Anspruch 1,
wobei die Taktsignalquelle drei verschiedene Zustände ausgibt, und
wobei
- der Steuereingang des Transistors (8) mittels eines Transformators (14) galvanisch entkoppelt ist, wobei der Steuereingang (8) mit der Sekundärseite des Transformators (14) verbunden ist und die Sekundärseite des Transformators (14) eine erste und eine zweite gegensinnig gepolte und in Serie geschaltete Wicklungen aufweist, und
- das Ein- bzw. Ausschalten des Transistors (8) durch transformatorische Übertragung von Strom- oder Spannungsimpulsen von einer Steuereinheit als Taktsignalquelle erfolgt.

3. Verfahren nach Anspruch 2,
wobei zum Einschalten des Transistors primärseitig ein Strom- oder Spannungsimpuls einer ersten Polarität erzeugt wird, über den der Transistor über die erste sekundärseitige Wicklung eingeschaltet wird, und ein Entladetransistor, der im eingeschalteten Zustand den Steuereingang des Transistors entlädt, durch die zweite sekundärseitige Wicklung aktiv ausgeschaltet wird.

4. Verfahren nach Anspruch 2 oder 3,
wobei zum Ausschalten des Transistors primärseitig ein Strom- oder Spannungsimpuls einer zweite, zu der ersten Polarität invertierten Polarität erzeugt wird, über den über die zweite sekundärseitige Wicklung ein Entladetransistor eingeschaltet wird, der somit den Steuereingang des Transistors entlädt, so dass dieser ausgeschaltet wird.

5. Verfahren nach einem der Ansprüche 2 bis 4,
wobei die sekundärseitigen Wicklungen mit einer Drossel (4) eines Lastkreises (1) auf einen gemeinsamen Kern gewickelt ist, welcher Lastkreis (1) mit dem Verbindungspunkt zweier in Serie geschalteter Transistoren verbunden ist, dessen potentialhöherer Transistor transformatorisch über Strom- oder Spannungsimpulse angesteuert wird.

6. Verfahren nach Anspruch 1,
wobei als erstes Steuerelement ein passives Bauelement, vorzugsweise eine Diode (D1) verwendet wird.

7. Verfahren nach Anspruch 1 oder 6,
bei dem als zweites Steuerelement ein passives Bauelement, vorzugsweise eine Diode, besonders bevorzugt eine Zenerdiode (D3) und/oder ein aktives Bauelement, wie bspw. ein Transistor (Q1) verwendet werden.

8. Verfahren nach einem der vorhergehenden Ansprüche,
wobei die Strom- oder Spannungsimpulse kürzer als die Ein- oder Ausschaltzeit des angesteuerten Schaltelements (8, M1) sind.

9. Verfahren nach einem der vorhergehenden Ansprüche,
wobei die Steuereinheit (15, V1) als Taktsignalquelle in einem vorbestimmten Takt Strom- oder Spannungsimpulse ausgibt, unabhängig davon, ob der Zustand des Schaltelements (8, M1) geändert werden soll.

10. Verfahren nach Anspruch 9,
wobei die Steuereinheit (15, V1) für den Fall, dass der Zustand des Schaltelements (8, M1) geändert werden soll, einen Strom- oder Spannungsimpuls erzeugt, der gegenüber dem vorangegangenen Impuls eine umgekehrte Polarität aufweist.

11. Verfahren nach Anspruch 9 oder 10,
wobei die Steuereinheit (15, V1) für den Fall, dass der Zustand des Schaltelements (8, M1) beibehalten werden soll, auf einen Strom- oder Spannungsimpuls erster Polarität erneut einen Strom- oder Spannungsimpuls derselben Polarität sendet.

12. Verfahren nach Anspruch 1 zum Betreiben von HID-Lampen mit einem Vollbrücken-Wechselrichter mit wenigstens vier Schaltern,
wobei die Ansteuerung der Steuereingänge der beiden auf hohem Potential liegenden Schaltelemente (S1, S3), insbesondere von Transistoren,
durch das Ein- bzw. Ausschalten der Steuereingänge durch transformatorische Übertragung von Strom- oder Spannungsimpulsen von einer Steuereinheit als Taktsignalquelle erfolgt und wobei die Steuereingänge transformatorisch galvanisch entkoppelt sind,
und wobei die Steuereingänge der beiden auf niedrigem Potential liegenden Schaltelemente, insbesondere von Transistoren, nicht transformatorisch galvanisch entkoppelt sind.

13. Verfahren nach Anspruch 12,
wobei die Taktsignalimpulse kürzer als die Ein- oder Ausschaltzeit des auf hohem Potential liegenden angesteuerten Schaltelements (S1, S3) sind.

14. Steuerschaltung mit einer Steuereinheit, insbesondere integrierte Schaltung, einem ersten Schaltungsbauteil (S1) und einem zweiten Schaltungsbauteil (S2),
wobei die Steuereinheit zur Ausgabe von Spannungs- oder Stromimpulsen als Taktsignalen zur Ansteuerung des Steuereingangs eines Schaltelements (8, M1), insbesondere eines Transistors, ausgebildet ist, wobei der Steuereingang transformatorisch galvanisch entkoppelt angesteuert wird, und das Ein- bzw. Ausschalten des Steuereingangs durch transformatorische Übertragung der Strom- oder Spannungsimpulse erfolgt,
wobei die Steuereinheit dazu ausgelegt ist,
- einen Strom- oder Spannungsimpuls erster Polarität auszugeben, der dazu ausgebildet ist, über das erste Schaltungsbauteil (S1) den Steuereingang derart aufzuladen, dass diese Ladung auch nach dem Strom- oder Spannungsimpuls erster Polarität verbleibt und somit das Schaltelement (8, M1) eingeschaltet verbleibt und
- einen Strom- oder Spannungsimpuls mit umgekehrter Polarität auszugeben, der dazu ausgebildet ist, die Ladung an dem Steuereingang über das zweite Schaltungsbauteil (S2) derart zu entladen, dass das Schaltelement (8, M1) ausgeschaltet wird.

15. Vorschaltgerät für Gasentladungslampen, insbesondere
für HID-Lampen,
aufweisend einen Halbbrücken- oder Vollbrücken-Wechselrichter, sowie eine Steuerschaltung nach Anspruch 14.

16. Schaltregler enthaltend die Steuerschaltung nach Anspruch 14, mit wenigstens einem Schalter als Schaltelement,
wobei der Schalter mittels der Steuerschaltung angesteuert wird.

17. Vorschaltgerät enthaltend die Sreuerschaltung nach Anspruch 14, für LED,
aufweisend einen Sperrwandler mit wenigstens einem Schalter als Schaltelement,
wobei der Schalter mittels der Steuerschaltung angesteuert wird.

## Claims

1. Method for actuating the control input of a switching element (8, M1), particularly of a transistor,
wherein
- the control input is actuated in a manner DC-decoupled by a transformer, and
- the control input is switched on and off by virtue of a control unit (15, V1) as a clock signal source transmitting current or voltage pulses using a transformer,
**characterized in that**
- a current or voltage pulse of a first polarity charges the control input via a first circuit component (S1), this charge remains even after the current or voltage pulse of a first polarity and hence the switching element (8, M1) remains switched on, and
- a current or voltage pulse having the opposite polarity discharges the charge of the control input via a second circuit component (S2) such that the switching element (8, M1) is switched off.

2. Method according to Claim 1,
wherein the clock signal source outputs three different states, and
wherein
- the control input of the transistor (8) is DC-decoupled by means of a transformer (14), wherein the control input (8) is connected to the secondary side of the transformer (14), and the secondary side of the transformer (14) has a first and a second winding which are connected in series and have opposite polarity, and
- the transistor (8) is switched on and off by virtue of a control unit as a clock signal source transmitting current or voltage pulses using a transformer.

3. Method according to Claim 2,
wherein the transistor is switched on by virtue of a current or voltage pulse of a first polarity being produced on the primary side and being used to switch on the transistor via the first secondary-side winding, and a discharge transistor which discharges the control input of the transistor in the switched-on state being actively switched off by the second secondary-side winding.

4. Method according to Claim 2 or 3,
wherein the transistor is switched off by virtue of a current or voltage pulse of a second polarity, which is inverted with respect to the first polarity, being produced on the primary side and being used to switch on a discharge transistor via the second secondary-side winding, which discharge transistor therefore discharges the control input of the transistor, with the result that the latter is switched off.

5. Method according to one of Claims 2 to 4,
wherein the secondary-side windings are wound with an inductor (4) from a load circuit (1) onto a common core, which load circuit (1) is connected to the connecting point between two series-connected transistors in which the transistor having the higher potential is actuated by means of current or voltage pulses using a transformer.

6. Method according to Claim 1,
wherein the first control element used is a passive component, preferably a diode (D1).

7. Method according to Claim 1 or 6,
in which the second control element used is a passive component, preferably a diode, particularly preferably a Zener diode (D3) and/or an active component, such as a transistor (Q1).

8. Method according to one of the preceding claims,
wherein the current or voltage pulses are shorter than the switched-on or switched-off time of the actuated switching element (8, M1).

9. Method according to one of the preceding claims,
wherein the control unit (15, V1), as a clock signal source, outputs current or voltage pulses at a predetermined clock rate irrespective of whether the state of the switching element (8, M1) is intended to be changed.

10. Method according to Claim 9,
wherein if the state of the switching element (8, M1) is intended to be changed then the control unit (15, V1), produces a current or voltage pulse which has an opposite polarity in comparison with the preceding pulse.

11. Method according to Claim 9 or 10,
wherein if the state of the switching element (8, M1) is intended to be maintained the control unit (15, V1) responds to a current or voltage pulse of a first polarity by sending a current or voltage pulse of the same polarity again.

12. Method according to Claim 1, for operating HID lamps having a full-bridge rectifier with at least four switches,
wherein the control inputs of the two switching elements (S1, S3), particularly of transistors, which are at high potential are actuated by virtue of the control inputs being switched on and off by virtue of a control unit as a clock signal source transmitting current or voltage pulses using a transformer and wherein the control inputs are DC-decoupled by a transformer, and wherein the control inputs of the two switching elements, particularly of transistors, which are at low potential are not DC-decoupled by a transformer.

13. Method according to Claim 12,
wherein the clock signal pulses are shorter than the switched-on or switched-off time of the actuated switching element (S1, S3) which is at high potential.

14. Control circuit having a control unit, particularly an integrated circuit, a first circuit component (S1) and a second circuit component (S2), wherein the control unit is designed to output voltage or current pulses as clock signals for actuating the control input of a switching element (8, M1), particularly of a transistor, wherein the control input is actuated in a manner DC-decoupled by a transformer, and the control input is switched on and off by virtue of the current or voltage pulses being transmitted using a transformer,
wherein the control unit is designed
- to output a current or voltage pulse of a first polarity, which current or voltage pulse is designed to charge the control input via the first circuit component (S1) such that this charge remains even after the current or voltage pulse of a first polarity and hence the switching element (8, M1) remains switched on, and
- to output a current or voltage pulse having the opposite polarity, which current or voltage pulse is designed to discharge the charge of the control input via the second circuit component (S2) such that the switching element (8, M1) is switched off.

15. Ballast for gas discharge lamps, particularly for HID lamps,
having a half-bridge or full-bridge rectifier, and also a control circuit according to Claim 14.

16. Switched-mode regulator containing the control circuit according to Claim 14, having at least one switch as a switching element,
wherein the switch is actuated by means of the control circuit.

17. Ballast containing the control circuit according to Claim 14, for LEDs,
having a flyback converter having at least one switch as a switching element,
wherein the switch is actuated by means of the control circuit.

## Revendications

1. Procédé pour la commande de l'entrée de commande d'un élément de commutation (8, M1), en particulier d'un transistor,
dans lequel
- l'entrée de commande est commandée de manière isolée galvaniquement par transformateur, et
- la mise en circuit ou hors circuit de l'entrée de commande est effectuée au moyen d'une transmission, par transformateur, d'impulsions de courant ou de tension à partir d'une unité de commande (15, V1) comme source de signal d'horloge,
**caractérisé en ce que**
- une impulsion de courant ou de tension de première polarité charge l'entrée de commande par l'intermédiaire d'un premier composant de circuit (S1), cette charge reste encore après l'impulsion de courant ou de tension de première polarité et ainsi l'élément de commutation (8, M1) reste mis en circuit et
- une impulsion de courant ou de tension avec une polarité inverse décharge la charge à l'entrée de commande par l'intermédiaire d'un deuxième composant de circuit (S2) de telle sorte que l'élément de commutation (8, M1) est mis hors circuit.

2. Procédé selon la revendication 1,
dans lequel la source de signal d'horloge délivre en sortie trois états différents, et dans lequel
- l'entrée de commande du transistor (8) est isolée galvaniquement au moyen d'un transformateur (14), dans lequel l'entrée de commande (8) est reliée au secondaire du transformateur (14) et le secondaire du transformateur (14) présente un premier et un deuxième enroulements de polarité inverse et montés en série, et
- la mise en circuit ou hors circuit du transistor (8) est effectuée au moyen d'une transmission, par transformateur, d'impulsions de courant ou de tension à partir d'une unité de commande comme source de signal d'horloge.

3. Procédé selon la revendication 2,
dans lequel pour mettre en circuit le transistor une impulsion de courant ou de tension d'une première polarité est générée du côté primaire, impulsion par l'intermédiaire de laquelle le transistor est mis en circuit via le premier enroulement secondaire, et un transistor de décharge, qui lorsqu'il est mis en circuit décharge l'entrée de commande du transistor, est mis hors circuit de manière active au moyen du deuxième enroulement secondaire.

4. Procédé selon la revendication 2 ou 3,
dans lequel pour mettre hors circuit le transistor une impulsion de courant ou de tension d'une deuxième polarité inversée par rapport à la première polarité est générée du côté primaire, impulsion par l'intermédiaire de laquelle un transistor de décharge est mis en circuit via le deuxième enroulement secondaire, ledit transistor de décharge déchargeant ainsi l'entrée de commande du transistor de sorte que celui-ci est mis hors circuit.

5. Procédé selon l'une des revendications 2 à 4,
dans lequel l'enroulement secondaire est enroulé avec une inductance (4) d'un circuit de charge (1) sur un noyau commun, lequel circuit de charge (1) est relié au point de jonction de deux transistors montés en série, dont le transistor de potentiel supérieur est commandé par transformateur par l'intermédiaire d'impulsions de courant ou de tension.

6. Procédé selon la revendication 1,
dans lequel un composant passif, de préférence une diode (D1), est utilisé comme premier élément de commande.

7. Procédé selon la revendication 1 ou 6,
dans lequel un composant passif, de préférence une diode, de manière particulièrement préférée une diode Zener (D3) et/ou un composant actif, comme par exemple un transistor (Q1), sont utilisés comme deuxième élément de commande.

8. Procédé selon l'une des revendications précédentes,
dans lequel les impulsions de courant ou de tension sont plus courtes que la durée de mise en tension ou hors tension de l'élément de commutation (8, M1) commandé.

9. Procédé selon l'une des revendications précédentes,
dans lequel l'unité de commande (15, V1) en tant que source de signal d'horloge délivre en sortie des impulsions de courant ou tension selon un cadencement prédéfini, indépendamment du fait que l'état de l'élément de commutation (8, M1) doit être changé.

10. Procédé selon la revendication 9,
dans lequel, dans le cas où l'état de l'élément de commutation (8, M1) doit être changé, l'unité de commande (15, V1) génère une impulsion de courant ou tension, qui présente une polarité inverse par rapport à la précédente impulsion.

11. Procédé selon la revendication 9 ou 10,
dans lequel, dans le cas où l'état de l'élément de commutation (8, M1) doit être maintenu, l'unité de commande (15, V1) envoie, suite à une impulsion de courant ou tension de première polarité, à nouveau une impulsion de courant ou tension de même polarité.

12. Procédé selon la revendication 1 pour faire fonctionner des lampes DHI avec un onduleur en pont complet avec au moins quatre commutateurs,
dans lequel la commande des entrées de commande des deux éléments de commutation (S1, S3), en particulier des transistors, situés à un potentiel élevé est effectuée par l'intermédiaire de la mise en tension ou hors tension des entrées de commande via une transmission par transformateur d'impulsions de courant ou tension à partir d'une unité de commande comme source de signal d'horloge, et dans lequel les entrées de commande sont isolées galvaniquement par transformateur,
et dans lequel les entrées de commande des deux éléments de commutation, en particulier des transistors, situés à un potentiel inférieur ne sont pas isolées galvaniquement par transformateur.

13. Procédé selon la revendication 12,
dans lequel les impulsions de signal d'horloge sont plus courtes que la durée de mise en tension ou hors tension de l'élément de commutation (S1, S3) commandé situé à un potentiel élevé.

14. Circuit de commande présentant une unité de commande, en particulier un circuit intégré, un premier composant de circuit (S1) et un deuxième composant de circuit (S2),
dans lequel l'unité de commande est arrangée pour délivrer en sortie des impulsions de courant ou tension comme signaux d'horloge pour la commande de l'entrée de commande d'un élément de commutation (8, M1), en particulier d'un transistor,
dans lequel l'entrée de commande est commandée de manière isolée galvaniquement par transformateur, et la mise en tension ou hors tension de l'entrée de commande est effectuée par l'intermédiaire d'une transmission par transformateur d'impulsions de courant ou de tension,
dans lequel l'unité de commande est arrangée pour
- délivrer en sortie une impulsion de courant ou tension de première polarité, laquelle est arrangée pour charger l'entrée de commande par l'intermédiaire du premier composant de circuit (S1) de telle sorte que cette charge reste encore après l'impulsion de courant ou tension de première polarité et qu'ainsi l'élément de commutation (8, M1) reste mis en tension et
- délivrer en sortie une impulsion de courant ou tension de polarité inverse, laquelle est arrangée pour décharger la charge présente à l'entrée de commande par l'intermédiaire du deuxième composant de circuit (S2) de telle sorte que l'élément de commutation (8, M1) est mis hors tension.

15. Ballast pour lampes à décharge de gaz, en particulier pour lampes DHI,
présentant un onduleur en demi-pont ou en pont complet, ainsi qu'un circuit de commande selon la revendication 14.

16. Régulateur à découpage comprenant le circuit de commande selon la revendication 14, avec au moins un commutateur comme élément de commutation,
dans lequel le commutateur est commandé au moyen du circuit de commande.

17. Ballast comprenant le circuit de commande selon la revendication 14, pour LED, présentant un convertisseur Flyback avec au moins un commutateur comme élément de commutation,
dans lequel le commutateur est commandé au moyen du circuit de commande.
